Europäisches Patentamt

European Patent Office

Office européen des brevets

(19)

(11) Publication number: **0 350 238**
**A2**

# (12) EUROPEAN PATENT APPLICATION

(21) Application number: 89306735.5

(51) Int. Cl.⁴: **H04L 1/16**

(22) Date of filing: 03.07.89

(30) Priority: 04.07.88 JP 166572/88

(43) Date of publication of application:
**10.01.90 Bulletin 90/02**

(84) Designated Contracting States:
**AT BE CH DE ES FR GB GR IT LI NL SE**

(71) Applicant: **OMRON TATEISI ELECTRONICS CO.**
**10, Tsuchido-cho Hanazono Ukyo-ku**
**Kyoto 616(JP)**

(72) Inventor: **Azuma, Toshio c/o P.C.Omron Tateisi Electronics Co**
**20 Igadera, Shimokaiinji**
**Nagaokakyo-shi, Kyoto 617(JP)**

(74) Representative: **Calderbank, Thomas Roger et al**
**MEWBURN ELLIS 2 Cursitor Street**
**London EC4A 1BQ(GB)**

(54) Data communicating apparatus.

(57) The data communicating apparatus subdivides an information message into data blocks each having a predetermined length. When the number of data block transmission errors exceeds a fixed value, the data block to be subsequently transmitted (including a data block to be retransmitted) is further subdivided into small data blocks for the subsequent transmission. As a result, the error occurrence ratio is lowered and the data communication can be continued even under an unfavorable communicating condition.

Fig.4b

# DATA COMMUNICATING APPARATUS

The present invention relates to a data communicating apparatus for effecting the transmission and reception of information messages by use of a communication line, a dedicated line, and other lines (including a ratio system).

Appratuses and systems to achieve data transmission and reception vie communication paths such as a communication line, a dedicated line, and other lines have been widely put to practice, for example, in an automated transaction apparatus and a point of sales, POS system. In general, in accordance with the data communication method employed in such apparatuses, an information message is subdivided into data blocks each having an appropriate length and then the data blocks thus obtained are transmitted in a sequential fashion. In other words, each time there is accomplished a transmit and receive operation for each data block, an appratus on the receiving side examines the received data for an error so as to return an acknowledge response of ACK to an apparatus on the transmission side when the data is correctly received and to return a negative response of NAK thereto when the data is not correctly received. The apparatus on the transmission side, on receiving ACK, sends the next data blocks; whereas a retransmission of the same data block is carried out if NAK is received.

In this situation, although efficiency of the information message transmission is increased when the length of a data block becomes to be longer, the chance of occurrence of the transmission error increases as the number of bits becomes to be greater.

Incidentally, in addition to the length of the data block, the state of the communication line or the other related elements also causes a variation in the error occurrence ratio during the data block transmission and reception. For example, when a noise is present in the communication line, the possibility of an error occurrence is considerably increased. However, in the conventional data transmission apparatus, since the data block length of the data block is fixedly assigned and is kept unchanged for the data transmission and reception, even when there appears an increase in the error occurrence ratio because of an external factor, the system conducts the retransmission of the data block with the same block length, which in consequence further lowers the transmission efficiency and which leads to a disadvantage that it is necessary to transmit again the data after a predetermined period of time is elapsed or on the subsequent day. Consequently, the system is attended with a disadvantage that efficiency of the data processing is lowered and the feature associated with the realtime processing is deteriorated.

It is therefore an object the present invention devised in the situation above to provide a data communicating apparatus in which when the ratio of transmission error occurrences is increased, the data length of data for a transmission is decreased so as to reduce the error occurrence ratio and to solve the problems above.

In accordance with the present invention, there is provided a data communicating apparatus in which an information message is subdivided into data blocks each having a predetermined length so as to sequentially transmit the data blocks characterized by comprising count means for counting a number of transmission errors of the data block and re-subdivide and transmit means operative when a value of said count means exceeds a fixed value for further subdividing each data block to be subsequently transmitted into a plurality of data blocks so as to transmit the obtained data blocks.

In the data communicating apparatus, when the error ratio is increased during a data transmission (when the error occurrence ratio exceeds a fixed value), the system further subdivides each subsequent data block to be next transmitted (including the data block to be subsequently retransmitted) into small data items each having a data length smaller than the original data length and then transmits the attained data blocks. This enables the transmission of the data blocks to be continued even under an unfavorable condition of the communication line. In this case, it is also possible to adopt a method in which the data is transmistted after the condition that the data is subdivided again for transmission is notified in advance to apparatus on the the receive side. In a case where such a data item having the reduced length can be processed by the apparatus located on the receive side, the data thus subdivided again may be directly sent thereto without notifying above condition in advance.

According to the present invention, there is also provided a data communicating apparatus in which an information message is subdivided into data blocks each having a predetermined length so as to sequentially receive the data blocks characterized by comprising means operative when data length of data received is less than tha predetermined length for detecting a condition of an insufficient length and re-edit means for achieving a re-edit operation so as to concatenate a plurality of received data items into a data block having the predetermined length.

In the data communicating apparatus according to the presnt application, when there is received a data item transmitted with a length smaller than a predetermined length of the data block, an edit operation is achieved on a plurality of received data items such that the data items are combined to produce the original data block (having the predetermined length). With this provision, as a result, even when the ratio of transmission errors is increased and the data block is again subdivided for the transmission, the system can automatically cope with the condition so as to receive and to process such subdivided data blocks.

Furthermore, according to the present invention, the data communicating apparatus in which an information message is subdivided into data blocks each having a predetermined length so as to sequentially transmit the data blocks and in which an information message thus subdivided into data blocks each having a predetermined length are sequentially received is characterized by comprising count means for counting a number of transmision errors of the data block, re-subdivide and transmit means operative when a value of said count means exceeds a fixed value for further subdividing each data block to be subsequently transmitted into a plurality of data blocks so as to transmit the obtained data blocks, and re-edit means operative when a received data item has a length smaller than the predetermined length for achieving a re-edit operation so as to concatenate a plurality of received data items into a data block having the predetermined length.

According to the data communicating apparatus above, there are provided the re-subdivide and transmit means and the re-edit means in the apparatus. In consequence, the automatic communication control can be accomplished in any situation where the apparatus is assigned as a main station or as a slave station in the communication system.

As described above, according to the data communicating apparatus of the present invention, when the ratio of transmission errors is increased, the data length can be reduced for each transmission, which in consequence lowers the error occurrence ratio for a transmission. As a result, even when the state of the communication line and the like is unfavorable for the communication, there cannot take place a state where the operations to transmit and to receive data blocks are completely disabled; moreover, the data block can also be further subdivided for the data communication and hence it is possible to prevent the transmission failure from occurring and the characteristic of the realtime feature of data can be retained, thereby contributing to improvement of the transmission efficiency as a result.

These and other objects and advantages of the present invention will become apparent by reference to the following description and accompanying drawings wherein:

FIG. 1 is a schematic diagram showing a constitution of a POS system using a POS terminal as an embodiment according to the present invention;

FIG. 2 is a block diagram schematically showing a configuration of the POS terminal;

FIG. 3 is a configuration diagram showing a portion of the RAM of the POS terminal;

FIGS. 4a and 4b are flowcharts showing a data transmit operation of the POS terminal; and

FIG. 5 is a flowchart showing a data receive operation of the POS terminal.

Referring now to the drawings, description will be given of an embodiment of the data communicating apparatus according to the present invention.

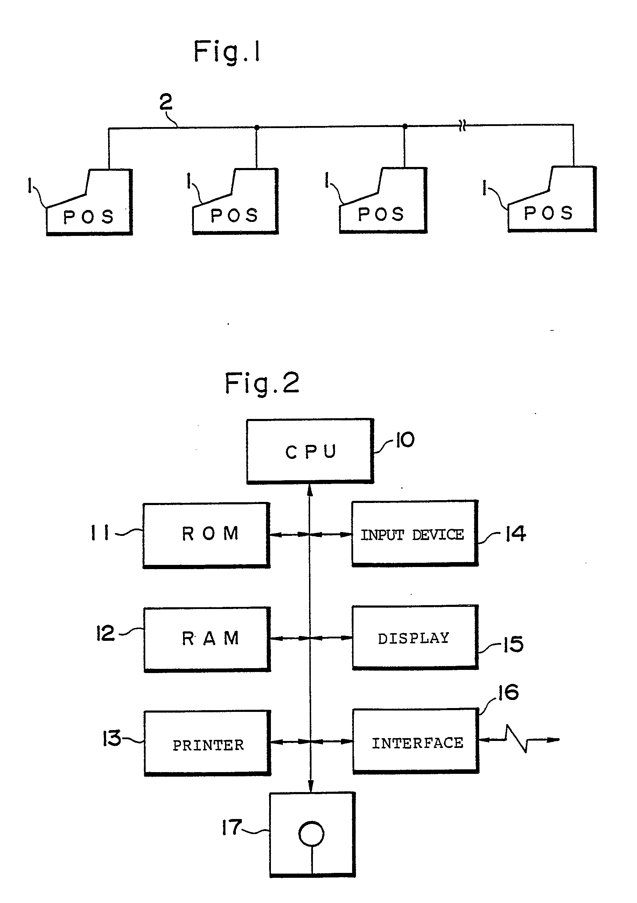

FIG. 1 is a diagram showing a constitution of a POS system using a POS terminal equipment as an embodiment in accordance with the present invention. In this system, there are installed a plurality of POS terminals 1 so as to be connected with each other through an in-house communication line 2 in which one of the POS terminals 1 is assigned to conduct a function as a control station.

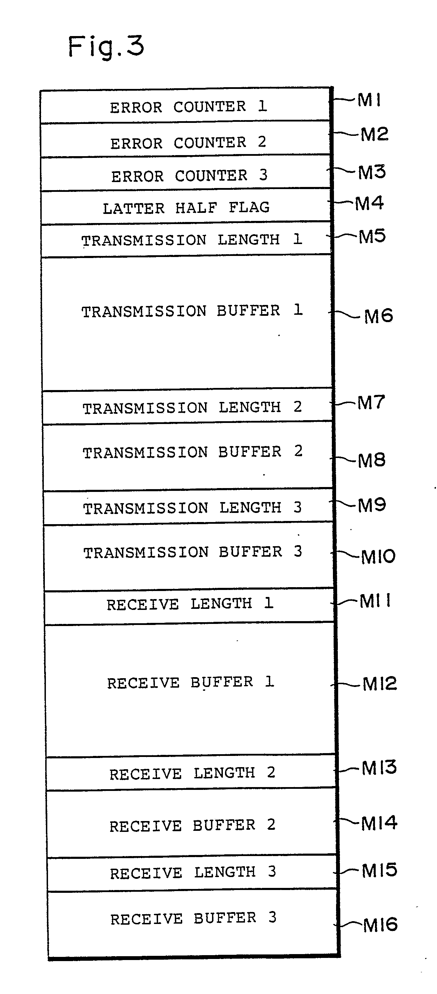

FIG. 2 is a block diagram showing an electrical configuration of the POS terminal equipment 1 including a CPU 10 as a control device, which is connected to a read-only memory, ROM 11, a random access memory, RAM 12, a printer 13, an input device 14, a display 15, an interface 16 to establish a connection between the terminal 1 and the communication line 2, and a floppy disk device 17. The ROM 11 is disposed to store therein a fundamental operation program of the POS terminal 1, whereas the RAM 12 is loaded with application programs and necessary areas such as a storage area shown in FIG. 3. The printer 13 is adopted to effect print-out operations to produce a receipt and a sales record. The input device 14 is provided with a keyboard for inputting a sales data item and a key switch for setting an operation mode. The display 15 is employed to display information including sales data and the like. The floppy disk device 17 is disposed to store therein in advance application porgrams; furthermore, when the floppy disk device 17 is utilized in the control station, received data is also stored therein.

FIG. 3 is a diagram showing a constitution of a portion of the RAM 12 comprising error counters 1 to 3 designated as M1 to M3 in this diagram for respectively storing therein transmission error counts. The error counter 1 is used to count the number of transmission errors in a case where the information message is subdivided for transmission into data blocks each having the predetermined length. The error counters 2 and 3 are employed, when the data block is further subdivided into two data blocks, to respectively count the numbers of transmission errors in the former half portion and in the latter half portion of the data block, respectively. This configuration further includes a latter half flag M4, which is utilized when a data block is received during a data transmission. When a received data block possesses a length equal to a half of the predetermined length, the content of the data block is buffered or stored in the receive buffer and the latter half flag is set. That is, this latter half flag is disposed to indicate a condition that the data to be subsequently received is the latter half portion of the pertinent data block. When the latter half portion of the the data block is received, the system resets the later half flag. In this configuration, there are also included an area M5 to store therein a transmission length 1 and a transmission buffer M6. The field associated with the transmission length 1 is used to store the data length of a data block of the predetermined length. The transmission buffer 1 is disposed for temporarily storing therein a data block having the predetermined length. Reference numerals M7 and M8 respectively indicate an area for storing therein a transmission length 2 and a transmission buffer 2; whereas M9 and M10 respectively denote an area to store therein a transmission length 3 and a transmission buffer 3. The transmission buffers 2 and 3 are used, when the data block stored in the transmission buffer 1 is subdivided into two portion for transmission, for storing therein the former half portion and the latter half portion of the data block; and the transmission lengths 2 and 3 indicate data lengths of the former and latter half portions, respectively.

In addition, reference numerals M11, M12, M13, M14, M15, and M16 respectively designate an area for storing a receive length 1, a receive buffer 1, an area for storing a receive length 2, a receive buffer 2, an area for storing a receive length 3, and a receive buffer 3. That is, these fields are used to respectively store therein the contents and data lengths of received data.

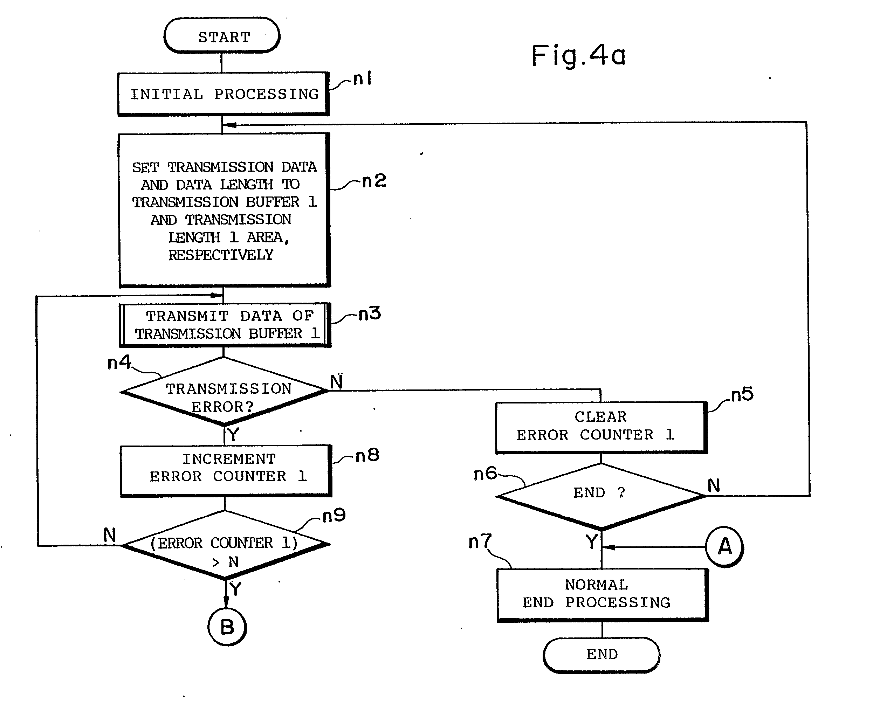

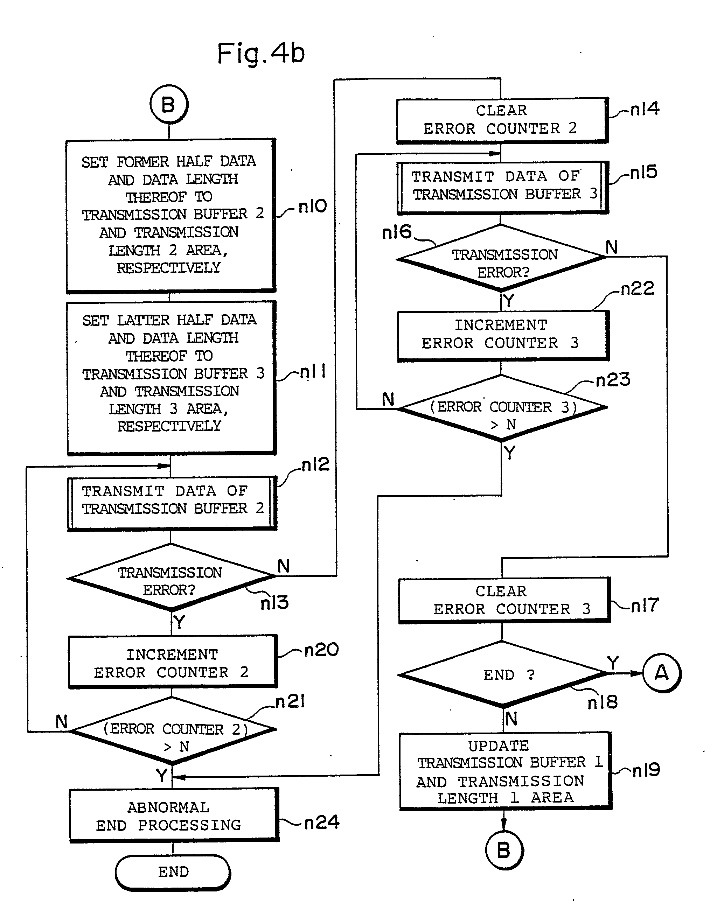

FIGS. 3a and 4b are flowcharts showing a data transmit operation carried out by the POS terminal 1. In step n1, the system executes an initial processing; and in step n2, a data block to be transmitted and a data length thereof are respectively set to the transmission buffer 1 (area M6) and the transmission length 1 storage area M5. Thereafter, the data thus set is transmitted (step n3) and then the system waits for a response to be received from a receive station.

If the content of the response is ACK, the processing proceeds from step n4 to step n5 so as to clear the error counter 1 (area M1). And then, until the system recognizes that all data block of the information message have been completely transmitted (step n6), control returns from this point to effect the step n2 and subsequent steps, thereby continuing the operation to transmit the data blocks constituting the message associated with the transmission. When the transmission of the information message is completed, control is passed to step n7 to effect a normal completion or end processing and then the operation is terminated.

On the other hand, in a case where NAK is received as a response in the step n4, the error counter 1 is incremented by one (step n8) and then if the value attained through a computation of the error counter 1 is less than N (fixed value, for example, N = 7), control is returned from step n9 to step n3 so as to conduct a retransmission of the same data block. If the value of the error counter 1 attained through the computation exceeds N, the processing proceeds to step n10 and subsequent steps so as to subdivide the data block into two data blocks for the subsequent transmission.

In steps n10 and n11, the former half portion and the latter half portion of the data block stored in the transmission buffer 1 are respectively moved to the transmission buffers 2 (M8) and 3 (M10), and then the data lengths of the respective portions are respectively stored in the transmission length 2 storage area (M7) and the transmission length 3 storage area (M9). In step n12, the content of the transmission buffer 2 is transmitted and then the system enters a state awaiting a response to be received from the receive station (step n13). If there is received a response of ACK, the error counter 2 is cleared (step n14) and then control porceeds to an operation (step n15 and subsequent steps) to transmit the content of the transmission buffer 3. On the other hand, if a response of NAK is received, the error counter 2 is incremented by one (step n20). If the computation result of the error counter 2 exceeds N as a result (step n21), the system assumes a transmission disabled state and hence causes an abnormal termination to be effected (step n24), whereas if the resultant value of the counter 2 is at most N, control returns to step n12 for the retransmission of the data block. In step n15, the content of the transmission buffer 2 is transmitted and then the system enters a state of wait for a response to be received from the receive station (step n16). If a response of ACK is received, the content of the error counter 3 is cleared (step n17) and then the system conducts a judgement to determine whether or not all data block associated with the information message have already been completely transmitted (step n18). If the transmit operations have been completed for the information message, control proceeds to step n7 to effect the end processing; otherwise, the next data block is loaded in the transmission buffer 1 and a data length of the data block is stored in the transmission length 1 area (step n19) and the control returns to step n10. On the other hand, if a response of NAK is received, the error counter 3 is incremented by one (step n22). As a result, if the computed value of the error counter 3 exceeds N (step n23), a transmission disabled state is assumed and an abnormal termination is effected (step n24); whereas if the resultant value of the counter 3 is equal to or less than N, control returns to step n15 to achieve the retransmission of the data block.

It may also be possible that in step n21 or n23, if the computed value of the error counter 2 or 3 exceeds N, the data stored in the transmission buffer 2 or 3 is further subdivided into two data blocks for the subsequent transmission.

Furthermore, the system may be configured so as to detect a condition that the non-error judgement occurs a predetermined number of times in a successive fashion in the step n13 and n16 such that control is returned from the step n19 to the step n3 in this situation. With this provision, the data length of data to be subjected to a transmission is restored from the length attained by the subdivision to the original length.

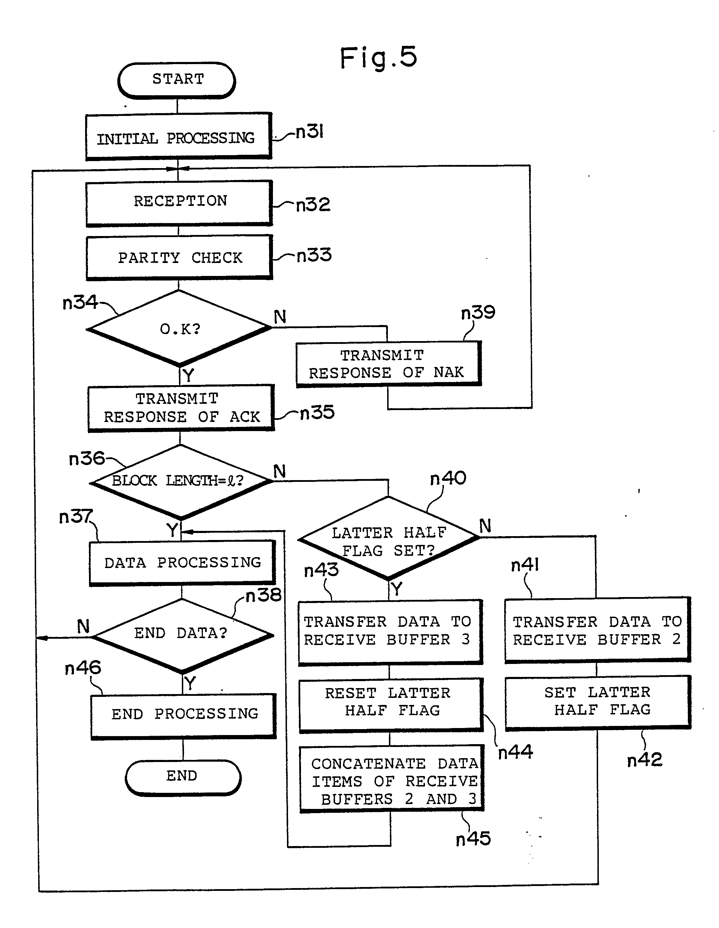

FIG. 5 is a flowchart showing a receive operation conducted by the POS terminal 1. In step n31, an initial processing is carried out and then a transmission data block is received in step n32. The received data is examined for an error (step n33). If the system does not find any error, a response of ACK is returned to the transmission station (step n35); whereas is an error is detected, a reply of NAK is returned to the receive station (step n39). If NAK is returned, the processing proceeds to step n32 so as to receive the same data again; whereas if ACK is returned, the system executes step n36 to determine the length of the received data block. If the length of the data block is equal to the predetermined length $\ell$, a predetermined data processing is achieved in this state (step n37); whereas if the data thus received is the last data block of the information message, the normal end processig is effected (step n46), thereby terminating the pertinent operation. If the information message is not completed by the received data block, control is returned from step n38 to step n32.

On the other hand, if the received data possesses a data length is smaller than $\ell$, processing proceeds from step n36 to step n40 so as to conduct a judgement to determine whether or not the latter half flag is beforehand set. If the latter half flag is reset in advance, since it is judged that the data is the former half portion of the data block thus subdivided, the data is transferred to the receive buffer 2 (area M14) (step n41) and the latter half flag is set (step n42), and then control returns to step n32. In addition, if the latter half flag is beforehand set, since the data is assumed to be the latter half portion of the data block subdivided as described above, the data is moved to the receive buffer 3 (area M16) (step n43) and the latter half flag is reset (step n44), and then the data items stored in the receive buffers 2 and 3 are combined to effect an edit operation so as to produce again a data block having the predetermined length (step n45), thereafter control is passed to step n37 to execute a data processing.

The error counter 1 and steps n4 and n8 correspond to count means according to the present invention, and the transmission buffer 2 and 3 and operations of step n10 and subsequent steps correspond to re-subdivide and transmit means in accordance with the present invention. Furthermore, the latter half flag, the receive buffers 2 and 3, and step n45 correspond to re-edit means of the present invention.

In this embodiment, although the re-subdivision of the data block is carried out when the number of successive transmission errors exceeds a fixed value (seven) for a data block, the re-subdivision may also be achieved when the total of the transmission errors exceeds a fixed value during successive data block transmission.

While the particular embodiment of the invention has been shown and described, it will be obvious to those skilled in the art tht various changes and modifications may be made without departing from the present invention in its broader aspects.

## Claims

1. A data communicating apparatus in which an information message is subdivided into data blocks each having a predetermined length so as to sequentially transmit the data blocks comprising:
count means for counting a number of transmission errors of the data block: and
re-subdivide and transmit means operative when a value of said count means exceeds a fixed value for further subdividing each data block to be subsequently transmitted into a plurality of data blocks so as to transmit the data blocks.

2. A data communicating apparatus in which an information message is subdivided into data blocks each having a predetermined length so as to sequentially receive the data blocks comprising:
means operative when a data length of a received data items is less than the predetermined length for detecting a condition asociated with the data having the insufficient length; and

re-edit means for achieving a re-edit operation to concatenate a plurality of received data items into a data block having the predetermined length.

3. A data communicating apparatus in which an information message is subdivided into data blocks each having a predetermined length so as to sequentially transmit the data blocks and in which the subdivided data blocks are sequentially received comprising:

count means for counting a number of transmission errors of the data block;

re-subdivide and transmit means operative when a value of said count means exceeds a fixed value for further subdividing each data block to be subsequently transmitted into a plurality of data blocks so as to transmit the data blocks; and

re-edit means operative when a received data item has a length less than the predetermined length for achieving a re-edit operation to concatenate a plurality of received data items into a data block having the predetermined length.

4. A data communicating method in which an information message is subdivided into data blocks each having a predetermined length so as to sequentially transmit the data blocks comprising the following steps of:

counting a number of transmission errors of the data block: and

further effecting a subdivision, when a value of said count means exceeds a fixed value, so as to subdivide each data block to be subsequently transmitted into a plurality of data blocks so as to transmit the data blocks.

5. A data communicating method in which an information message is subdivided into data blocks each having a predetermined length so as to sequentially receive the data blocks comprising the following steps of:

judging to determine whether or not a data length of a received data item is less than the predetermined length; and

effecting a re-edit operation when the data length is less than the predetermined length so as to concatenate a plurality of received data items into a data block having the predetermined length.

6. A data communicting apparatus in which an information message is subdivided into data blocks each having a predetermined length so as to sequentially transmit the data blocks and in which the subdivided data blocks are sequentially received comprising the following steps of:

counting a number of transmission errors of the data block;

effecting a subdivision, when a value of said count means exceeds a fixed value, so as to further subdivideg each data block to be subsequently transmitted into a plurality of data blocks so as to transmit the data blocks; and

achieving a re-edit operation, when a received data item has a length less than the predetermined length, so as to concatenate a plurality of received data items into a data block having the predetermined length.

Fig.1

Fig.2

## Fig.3

| | |
|---|---|
| ERROR COUNTER 1 | ～M1 |
| ERROR COUNTER 2 | ～M2 |
| ERROR COUNTER 3 | ～M3 |
| LATTER HALF FLAG | ～M4 |
| TRANSMISSION LENGTH 1 | ～M5 |
| TRANSMISSION BUFFER 1 | ～M6 |
| TRANSMISSION LENGTH 2 | ～M7 |
| TRANSMISSION BUFFER 2 | ～M8 |
| TRANSMISSION LENGTH 3 | ～M9 |
| TRANSMISSION BUFFER 3 | ～M10 |
| RECEIVE LENGTH 1 | ～M11 |
| RECEIVE BUFFER 1 | ～M12 |
| RECEIVE LENGTH 2 | ～M13 |
| RECEIVE BUFFER 2 | ～M14 |
| RECEIVE LENGTH 3 | ～M15 |
| RECEIVE BUFFER 3 | ～M16 |

# Fig.4a

START

INITIAL PROCESSING — n1

SET TRANSMISSION DATA AND DATA LENGTH TO TRANSMISSION BUFFER 1 AND TRANSMISSION LENGTH 1 AREA, RESPECTIVELY — n2

TRANSMIT DATA OF TRANSMISSION BUFFER 1 — n3

n4 — TRANSMISSION ERROR?

CLEAR ERROR COUNTER 1 — n5

INCREMENT ERROR COUNTER 1 — n8

n6 — END ?

n9 — (ERROR COUNTER 1) > N

n7 — NORMAL END PROCESSING

A

B

END

# Fig.4b

B

SET FORMER HALF DATA AND DATA LENGTH THEREOF TO TRANSMISSION BUFFER 2 AND TRANSMISSION LENGTH 2 AREA, RESPECTIVELY —n10

SET LATTER HALF DATA AND DATA LENGTH THEREOF TO TRANSMISSION BUFFER 3 AND TRANSMISSION LENGTH 3 AREA, RESPECTIVELY —n11

TRANSMIT DATA OF TRANSMISSION BUFFER 2 —n12

TRANSMISSION ERROR? —n13  N  Y

INCREMENT ERROR COUNTER 2 —n20

(ERROR COUNTER 2) > N —n21  N  Y

ABNORMAL END PROCESSING —n24

END

CLEAR ERROR COUNTER 2 —n14

TRANSMIT DATA OF TRANSMISSION BUFFER 3 —n15

TRANSMISSION ERROR? —n16  N  Y

INCREMENT ERROR COUNTER 3 —n22

(ERROR COUNTER 3) > N —n23  N  Y

CLEAR ERROR COUNTER 3 —n17

END ? —n18  Y  A   N

UPDATE TRANSMISSION BUFFER 1 AND TRANSMISSION LENGTH 1 AREA —n19

B

# Fig.5